# EUROPEAN PATENT APPLICATION

(11) **EP 4 518 545 A1**
(43) Date of publication of application: **05.03.2025**
(21) Application number: 23761418.5
(22) Date of filing: 24.04.2023
(51) Int. Cl.: H04W 74/00, H04L 5/00, H04W 56/00, H04W 72/56, H04W 72/542, H04W 74/08

(54) **METHOD FOR TRANSMITTING AND RECEIVING BROADCAST CHANNEL AND RANDOM ACCESS CHANNEL AND DEVICE THEREFOR**

(30) Priority: 27.04.2022 US 202263335713 P
(71) Applicant: LG ELECTRONICS INC., Yeongdeungpo-gu Seoul 07336 (KR)
(72) Inventor: MYUNG, Sechang, Seoul 06772 (KR); YANG, Suckchel, Seoul 06772 (KR); KIM, Seonwook, Seoul 06772 (KR); KIM, Jaehyung, Seoul 06772 (KR)
(74) Representative: Mooser, Sebastian Thomas
(86) International application number: PCT/KR2023/005540
(87) International publication number: WO 2023/211086

(57) **Abstract**

A method of transmitting a random access channel (RACH) by a user equipment (UE) in a wireless communication system is disclosed. The method includes receiving a synchronization signal block (SSB) on a first carrier among a plurality of carriers, determining a second carrier for transmitting the RACH among the plurality of carriers, and transmitting the RACH on the second carrier.

## Description

### TECHNICAL FIELD

The present disclosure relates to a method of transmitting and receiving a broadcast channel and a random access channel (RACH) and an apparatus therefor, and more particularly, to a method of transmitting and receiving a broadcast channel on a specific carrier among a plurality of carriers and transmitting and receiving an RACH on any one of the remaining carriers and an apparatus therefor.

### BACKGROUND ART

As more and more communication devices demand larger communication traffic along with the current trends, a future-generation 5^{th} generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### TECHNICAL PROBLEM

An object of the present disclosure is to provide a method of transmitting or receiving broadcast channel and random access channel.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

According to an aspect of the present disclosure, provided herein is a metho of transmitting a random access channel (RACH) by a user equipment (UE) in a wireless communication system, including receiving a synchronization signal block (SSB) on a first carrier among a plurality of carriers, determining a second carrier for transmitting the RACH among the plurality of carriers, and transmitting the RACH on the second carrier.

The second carrier may be a carrier having a highest priority among the plurality of carriers.

The method may further include receiving, on the first carrier, a system information block (SIB) that includes a list including at least one carrier on which the RACH is capable of being transmitted among the plurality of carriers, and the determining the second carrier may include receiving information related to the second carrier included in the at least one carrier, and determining the second carrier based on the information.

The second carrier may be a carrier mapped to the SSB.

The second carrier may be determined based on reference signal received power (RSRP) of the SSB.

The method may further include receiving a random access response (RAR) related to the RACH, and the RAR may include information related to the second carrier.

In another aspect of the present disclosure, provided herein is a user equipment (UE) for transmitting a random access channel (RACH) in a wireless communication system, including at least one transceiver; at least one processor; and at least one memory operably connected to the at least one processor and configured to store instructions that, when executed, cause the at least one processor to perform operations. The operations may include receiving a synchronization signal block (SSB) through the at least one transceiver on a first carrier among a plurality of carriers, determining a second carrier for transmitting the RACH among the plurality of carriers, and transmitting the RACH through the at least one transceiver on the second carrier.

The second carrier may be a carrier having a highest priority among the plurality of carriers.

The operations may further include receiving, on the first carrier, a system information block (SIB) that includes a list including at least one carrier on which the RACH is capable of being transmitted among the plurality of carriers, and the determining the second carrier may include receiving information related to the second carrier included in the at least one carrier, and determining the second carrier based on the information.

The second carrier may be a carrier mapped to the SSB.

The second carrier may be determined based on reference signal received power (RSRP) of the SSB.

The operations may further include receiving a random access response (RAR) related to the RACH, and the RAR may include information related to the second carrier.

In another aspect of the present disclosure, provided herein is a method of receiving a random access channel (RACH) by a base station (BS) in a wireless communication system, including transmitting a synchronization signal block (SSB) on a first carrier among a plurality of carriers, and receiving the RACH on a second carrier determined to receive the RACH among the plurality of carriers.

In another aspect of the present disclosure, provided herein is a base station (BS) for receiving a random access channel (RACH) in a wireless communication system, including at least one transceiver; at least one processor; and at least one memory operably connected to the at least one processor and configured to store instructions that, when executed, cause the at least one processor to perform operations, and the operations may include transmitting a synchronization signal block (SSB) through the at least one transceiver on a first carrier among a plurality of carriers, and receiving the RACH through the at least one transceiver on a second carrier determined to receive the RACH among the plurality of carriers.

In another aspect of the present disclosure, provided herein is an apparatus for transmitting a random access channel (RACH) in a wireless communication system, including at least one processor; and at least one memory operably connected to the at least one processor and configured to store instructions that, when executed, cause the at least one processor to perform operations, and the operations may include receiving a synchronization signal block (SSB) on a first carrier among a plurality of carriers, determining a second carrier for transmitting the RACH among the plurality of carriers, and transmitting the RACH on the second carrier.

In another aspect of the present disclosure, provided herein is a computer-readable storage medium including at least one computer program that causes at least one processor to perform operations, and the operations may include receiving a synchronization signal block (SSB) on a first carrier among a plurality of carriers, determining a second carrier for transmitting the RACH among the plurality of carriers, and transmitting the RACH on the second carrier.

### ADVANTAGEOUS EFFECTS

According to the present disclosure, a periodically transmitted broadcast channel is transmitted and received only on a specific carrier. Therefore, power for the broadcast channel is consumed only on the specific carrier and power consumption for other carriers is reduced, thereby resulting in reduction in overall power consumption of a base station.

In addition, the broadcast channel may be transmitted even on another carrier according to a certain condition while reducing overall power consumption, thereby reducing overall power consumption while maintaining synchronization.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF DRAWINGS

FIG. 1 is a diagram for explaining network energy savings;
FIGS. 2 and 3 are diagrams illustrating the composition of a synchronization signal/physical broadcast channel (SS/PBCH) block and a method of transmitting an SS/PBCH block;
FIG. 4 is a diagram illustrating an exemplary 4-step RACH procedure;
FIG. 5 is a diagram illustrating an exemplary 2-step RACH procedure;
FIG. 6 is a diagram illustrating an exemplary contention-free RACH procedure;
FIGS. 7 and 8 are diagrams illustrating transmission of synchronization signal blocks (SSBs) and physical random access channel (PRACH) resources linked to the SSBs;
FIGS. 9 to 11 are diagrams for explaining overall operation processes of a UE and a BS according to an embodiment of the present disclosure;
FIG. 12 illustrates an exemplary communication system applied to the present disclosure;
FIG. 13 illustrates an exemplary wireless device applicable to the present disclosure; and

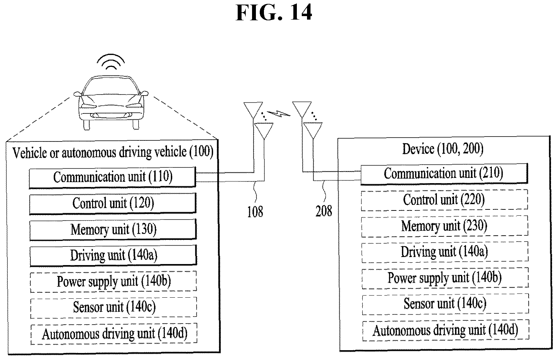

FIG. 14 illustrates an exemplary vehicle or autonomous driving vehicle applicable to the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3^{rd} generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

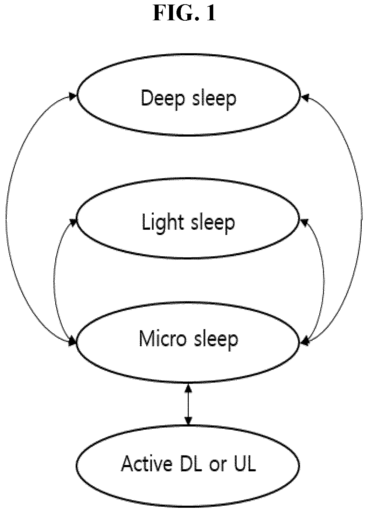

FIG. 1 is a diagram for explaining network energy savings (NES) according to the present disclosure.

As compared with the LTE system, the NR system is reported to use, by an NR base station (BS), 3 to 4 times higher than power consumed by an LTE BS due to more dense installation of BSs and use of more antennas/bandwidths/frequency bands. In order to solve the problem of increasing operating costs of business operators and build an eco-friendly network, a study item that discusses methods for reducing energy consumption of a BS has been approved.

3GPP radio access network working group 1 (RAN WG1) has defined an energy consumption model and simulation methodology of the BS in order to show that energy consumption gain is obtainable by applying NES technology. Specifically, as illustrated in FIG. 1, a sleep state of the BS (i.e., a state in which the BS does not perform both transmission and reception) and an active state of the BS (i.e., a state in which the BS performs transmission and/or reception) are defined, and a transition method in each state has been determined. In addition, a relative power value consumed by the BS in each state and time and energy required for state transition have been modeled.

Techniques discussed in 3GPP RAN WG1 for NES may be broadly divided into techniques in four domains (i.e., time/frequency/spatial/power domains), and specific techniques in each domain may be summarized as in Table 1.

**[Table 1]**

| **Time domain techniques** | |
|---|---|
| A-1 | Adaptation of common signals and channels |
| A-2 | Dynamic adaptation of UE specific signals and channels |
| A-3 | Wake up of gNB triggered by UE wake up signal |
| A-4 | Adaptation of DTX/DRX |
| A-5 | Adaptation of SSB/SIB1 |

| **Frequency domain techniques** | |
|---|---|
| B-1 | Multi-carrier energy savings enhancements |
| B-2 | Dynamic adaptation of bandwidth part of UE(s) within a carrier |
| B-3 | Dynamic adaptation of bandwidth of active BWP |

| **Spatial domain techniques** | |
|---|---|
| C-1 | Dynamic adaptation of spatial elements |
| C-2 | TRP muting/adaptation in multi-TRP operation |

| **Power domain techniques** | |
|---|---|
| D-1 | Adaptation of transmission power of signals and channels |
| D-2 | Enhancements to assist gNB digital pre-distortion |
| D-3 | Adaptation of transceiver processing algorithm |
| D-4 | PA backoff adaptation |
| D-5 | UE post-distortion |

As NES techniques in the time domain, methods have been discussed of turning on or off a UE-common signal (e.g., a synchronization signal block (SSB), a system information block (SIB), or paging) or a UE-specific signal (e.g., a channel state information-reference signal (CSI-RS)) as in A-1, A-2, and/or A-5 of Table 1, transmitting, by a UE, a wake-up signal for waking up the BS of an inactive state as in A-3 of Table 1, or controlling transmission and reception of a user equipment (UE) according to a discontinuous transmission (DTX)/discontinuous reception (DRX) pattern as in A-4 of Table 1.

As NES techniques in the frequency domain, methods have been discussed of an SCell operating without a synchronization signal block (SSB) in an inter-band carrier aggregation (CA) situation as in B-1 of Table 1, or switching a bandwidth part (BWP) or adjusting the bandwidth of the BWP, as in B-2 and/or B-3 of Table 1.

As NES techniques in the spatial domain, methods haven been discussed of supporting an operation of turning on or off each antenna port of the BS or each transmission and reception point (TRP) as in C-1 and/or C-2 of Table 1 and improving associated CSI measurement and report.

As NES techniques in the power domain, methods have been discussed of dynamically changing the power of a downlink signal (e.g., an SSB, a CSI-RS, or a physical downlink shared channel (PDSCH)) as in D-1 of Table 1 or applying a digital distortion compensation method or a tone reservation scheme of the BS/UE as in D-2, D-3, D-4, and/or D-5 of Table 1, thereby maximizing power amplifier (PA) efficiency and increasing transmission efficiency.

Techniques discussed in 3GPP PAN WG2 for NES, except for techniques (e.g., A-4, A-5, and B-1) commonly discussed in 3GPP RAN WG1 and 3GPP RAN WG2, include a method for NES-capable UEs or existing NR UEs to access an NES cell, and an efficient handover method for UEs accessing the NES cell.

As a result of the RAN#98-e meeting, NES work items were approved, and discussion topics for each leading WG are as follows. A RAN WG1 leading item includes a method of supporting an operation of turning on/off an antenna port of the BS or dynamically changing a power offset between a PDSCH and a CSI-RS, and improving associated CSI measurement and report (e.g. C-1 and D-1). A RAN WG2 leading item includes a method of controlling transmission and reception of the UE (e.g., A-4) according to a DTX/DRX pattern of the BS, a method of preventing existing NR UEs from accessing the NES-cell, and a conditional handover (CHO) method considering a source or target cell which is in operation of NES. In addition, a RAN WG3 leading item includes a method of exchanging information about an active beam between nodes and a paging method through a limited area. A RAN WG4 leading item includes an SCell (e.g., B-1) operating without an SSB in an inter-band CA situation.

### System information acquisition

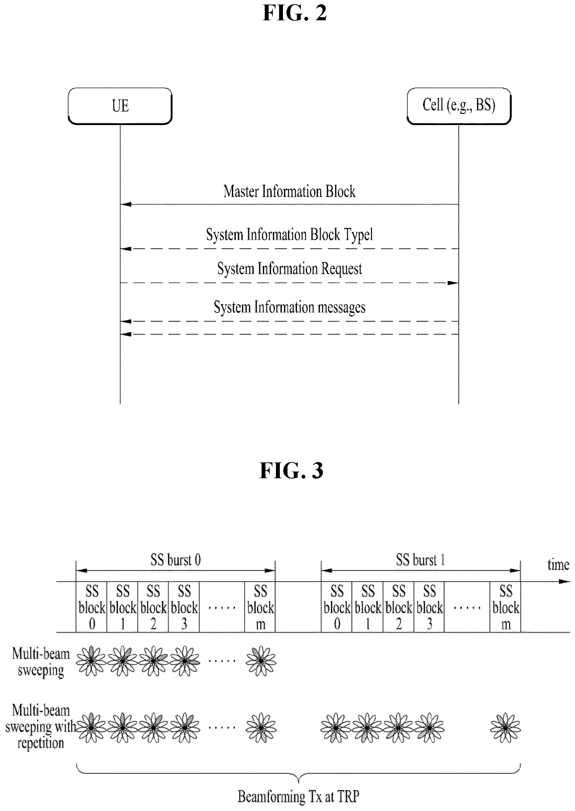

FIG. 2 illustrates a system information (SI) acquisition procedure. The UE may obtain access stratum (AS)-/non-access stratum (NAS)-information in the SI acquisition procedure. The SI acquisition procedure may be applied to UEs in RRC_IDLE, RRC_INACTIVE, and RRC_CONNECTED states.

SI is divided into a master information block (MIB) and a plurality of system information blocks (SIBs). The MIB and the plurality of SIBs are further divided into minimum SI and other SI. The minimum SI may include the MIB and system information block type 1 (SIB1), carrying basic information required for initial access and information required to obtain the other SI. SIB1 may also be referred to as remaining minimum system information (RMSI). For details, the following may be referred to.
- The MIB includes information/parameters related to reception of SIB1 and is transmitted on the PBCH of an SSB. The UE assumes that a half-frame including an SSB is repeated every 20 ms during initial cell selection. The UE may determine from the MIB whether there is any control resource set (CORESET) for a Type0-PDCCH common search space. The Type0-PDCCH common search space is a kind of PDCCH search space and used to transmit a PDCCH that schedules an SI message. In the presence of a Type0-PDCCH common search space, the UE may determine (1) a plurality of contiguous RBs and one or more consecutive symbols included in a CORESET, and (ii) a PDCCH occasion (e.g., a time-domain position at which a PDCCH is to be received), based on information (e.g., pdcch-ConfigSIB1) included in the MIB. In the absence of a Type0-PDCCH common search space, pdcch-ConfigSIB1 provides information about a frequency position at which the SSB/SIB1 exists and information about a frequency range without any SSB/SIB1.
- SIB1 includes information related to availability and scheduling (e.g., a transmission periodicity and an SI-window size) of the remaining SIBs (hereinafter, referred to as SIBx where x is an integer equal to or larger than 2). For example, SIB1 may indicate whether SIBx is broadcast periodically or in an on-demand manner upon UE request. If SIBx is provided in the on-demand manner, SIB1 may include information required for the UE to transmit an SI request. A PDCCH that schedules SIB1 is transmitted in the Type0-PDCCH common search space, and SIB1 is transmitted on a PDSCH indicated by the PDCCH.
- SIBx is included in an SI message and transmitted on a PDSCH. Each SI message is transmitted within a periodic time window (i.e., SI-window).

### Beam alignment

FIG. 3 illustrates exemplary multi-beam transmission of SSBs.

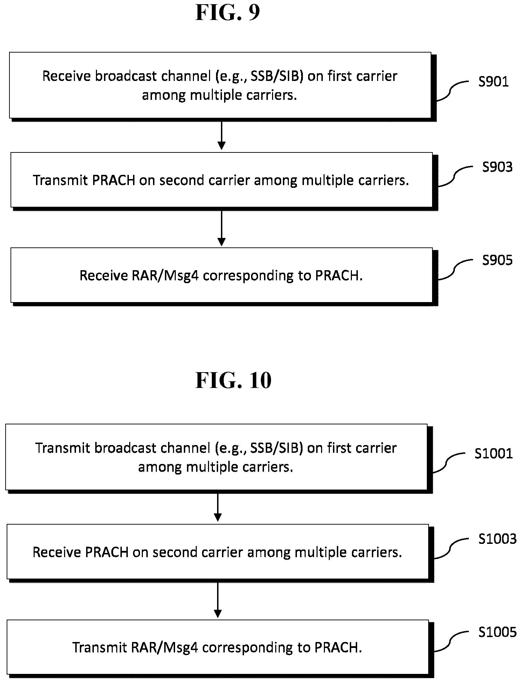

Beam sweeping refers to changing the beam (direction) of a wireless signal over time at a transmission reception point (TRP) (e.g., a BS/cell) (hereinafter, the terms beam and beam direction are interchangeably used). Referring to FIG. 10, an SSB may be transmitted periodically by beam sweeping. In this case, SSB indexes are implicitly linked to SSB beams. An SSB beam may be changed on an SSB (index) basis or on an SS (index) group basis. In the latter, the same SSB beam is maintained in an SSB (index) group. That is, the transmission beam direction of an SSB is repeated for a plurality of successive SSBs. The maximum allowed transmission number L of an SSB in an SSB burst set is 4, 8 or 64 according to the frequency band of a carrier. Accordingly, the maximum number of SSB beams in the SSB burst set may be given according to the frequency band of a carrier as follows.
- For frequency range of up to 3 GHz, maximum number of beams = 4
- For frequency range from 3 GHz to 6 GHz, maximum number of beams = 8
- For frequency range from 6 GHz to 52.6 GHz, maximum number of beams = 64

Without multi-beam transmission, the number of SSB beams is 1.

When the UE attempts initial access to the BS, the UE may align beams with the BS based on an SSB. For example, the UE performs SSB detection and then identifies a best SSB. Subsequently, the UE may transmit an RACH preamble in PRACH resources linked/corresponding to the index (i.e., beam) of the best SSB. The SSB may also be used for beam alignment between the BS and the UE even after the initial access.

### Random access channel (RACH) procedure

When a UE first accesses a BS or has no radio resource for signal transmission, the UE may perform a RACH procedure upon the BS.

The RACH procedure may be used for various purposes. For example, the RACH procedure may be used for initial network access from RRC_IDLE, an RRC connection re-establishment procedure, handover, UE-triggered UL data transmission, transition from RRC_INACTIVE, time alignment establishment in SCell addition, other system information (OSI) request and beam failure recovery, and so on. The UE may acquire UL synchronization and UL transmission resources from the RACH procedure.

The RACH procedure may be divided into a contention-based RACH procedure and a contention-free RACH procedure. The contention-based RACH procedure may be divided into a 4-step RACH procedure (4-step RACH) and a 2-step RACH procedure (2-step RACH).

### (1) 4-Step RACH: Type-1 Random Access Procedure

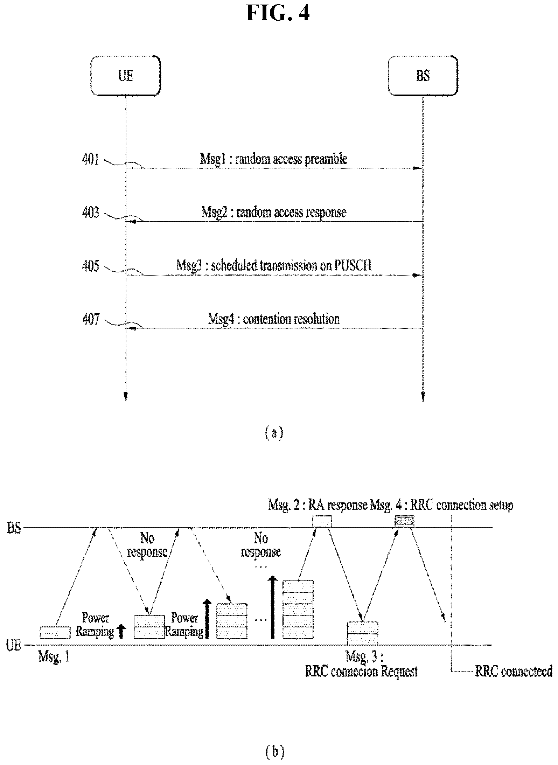

FIG. 4 is a diagram illustrating an exemplary 4-step RACH procedure.

If the (contention-based) RACH procedure is performed in four steps (i.e., 4-step RACH procedure), the UE may transmit a message (message 1 (Msg1)) including a preamble related to a specific sequence on a physical random access channel (PRACH) (401) and may receive a response message (random access response (RAR) message) (message 2 (Msg2)) to the preamble on a PDCCH and a PDSCH related thereto (403). The UE may transmit a message (message 3 (Msg3)) including a PUSCH based on scheduling information in the RAR (405). The UE may perform a contention resolution procedure by receiving a PDCCH signal and a PDSCH signal related thereto. To this end, the UE may receive a message (message 4 (Msg4)) containing contention resolution information on the contention resolution procedure from the BS (407).

The 4-step RACH procedure of the UE may be summarized as shown in Table 2 below.

**[Table 2]**

| | Type of Signals | Operations/Information obtained |
|---|---|---|
| 1^{st} step | PRACH preamble in UL | * Initial beam obtainment |
| | | * Random selection of RA-preamble ID |
| 2^{nd} step | Random Access Response on DL-SCH | * Timing Advanced information |
| | | * RA-preamble ID |
| | | * Initial UL grant Temporary C-RNTI |
| 3^{rd} step | UL transmission on UL-SCH | * RRC connection request |
| | | * UE identifier |
| 4^{th} step | Contention Resolution on DL | * Temporary C-RNTI on PDCCH for initial access |
| | | * C-RNTI on PDCCH for UE in RRC_CONNECTED |

First, the UE may transmit a random access preamble over a PRACH in UL as Msg1 of the RACH procedure.

Random access preamble sequences of two different lengths are supported. Long sequence length 839 is applied with SCSs of 1.25 and 5 kHz, and short sequence length 139 is applied with SCSs of 15, 30, 60 and 120 kHz.

Multiple preamble formats are defined by one or more RACH OFDM symbols and different cyclic prefixes (and/or guard times). The RACH configuration for the initial bandwidth of a primary cell (Pcell) may be included in system information of the cell and provided to the UE. The RACH configuration includes information on the SCS of the PRACH, available preambles, preamble formats, and the like. The RACH configuration includes information on association between SSBs and RACH (time-frequency) resources. The UE transmits the random access preamble on a RACH time-frequency resource associated with a detected or selected SSB.

The threshold of SSBs may be configured by the network for association with RACH resources. The RACH preamble may be transmitted or retransmitted based on SSB(s) having reference signal received power (RSRP) measured based thereon satisfying the threshold. For example, the UE may select one of the SSB(s) that satisfy the threshold and transmit or retransmit the RACH preamble based on a RACH resource associated with the selected SSB. For example, upon retransmission of the RACH preamble, the UE may reselect one of the SSB(s) and retransmit the RACH preamble based on a RACH resource associated with the reselected SSB. That is, the RACH resource for retransmission of the RACH preamble may be the same as and/or different from the RACH resource for transmission of the RACH preamble.

When the BS receives a random access preamble from the UE, the BS transmits an RAR message (Msg2) to the UE. A PDCCH scheduling a PDSCH carrying the RAR is cyclic redundancy check (CRC) scrambled with a random access (RA) radio network temporary identifier (RNTI) (RA-RNTI) and then transmitted. Upon detecting the PDCCH CRC-scrambled with the RA-RNTI, the UE may receive the RAR from the PDSCH scheduled by DCI carried on the PDCCH. The UE checks whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmission power for retransmitting the preamble based on the most recent transmission power, power increment, and power ramping counter.

The RAR information may include a preamble sequence transmitted by the UE, a temporary cell-RNTI (TC-RNTI) allocated by the BS to the UE that has attempted random access, and UL transmit time alignment information, UL transmission power adjustment information, and UL radio resource allocation information. If the UE receives the RAR information for itself on the PDSCH, the UE may obtain timing advance information for UL synchronization, an initial UL grant, a TC- RNTI. The timing advance information may be used to control a UL signal transmission timing. To better align PUSCH/PUCCH transmission by the UE with the subframe timing at the network, the network (e.g., BS) may obtain the timing advance information based on timing information detected from a PRACH preamble received from the UE and transmit the timing advance information to the UE. The UE may transmit a UL signal over a UL shared channel based on the RAR information as Msg3 of the RACH procedure. Msg3 may include an RRC connection request and a UE identifier. In response to Msg3, the network may transmit Msg4, which may be treated as a contention resolution message on DL. Upon receiving Msg4, the UE may enter the RRC_CONNECTED state.

As described above, a UL grant in the RAR may schedule PUSCH transmission to the BS. A PUSCH carrying initial UL transmission based on the UL grant in the RAR is also referred to as a Msg3 PUSCH. The content of an RAR UL grant may start at the MSB and end at the LSB, and the content may be given as shown in Table 3.

**[Table 3]**

| **RAR UL grant field** | **Number of bits** |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

A TPC command is used to determine the transmission power of the Msg3 PUSCH. For example, the TPC command may be interpreted as shown in Table 4.

**[Table 4]**

| TPC command | value [dB] |
|---|---|
| 0 | -6 |
| 1 | -4 |
| 2 | -2 |
| 3 | 0 |
| 4 | 2 |
| 5 | 4 |
| 6 | 6 |
| 7 | 8 |

### (2) 2-Step RACH: Type-2 Random Access Procedure

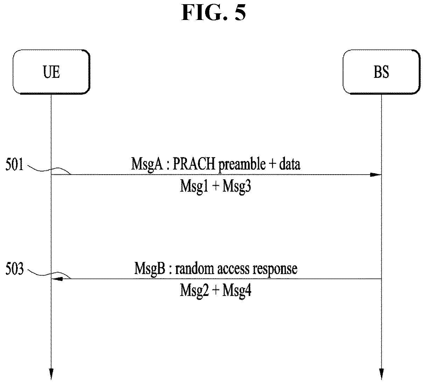

FIG. 5 is a diagram illustrating an exemplary 2-step RACH procedure.

The 2-step RACH procedure in which the (contention-based) RACH procedure is performed in two steps has been proposed to simplify the RACH procedure, that is, to achieve low signaling overhead and low latency.

The operations of transmitting Msg1 and Msg3 in the 4-step RACH procedure may be performed as one operation in the 2-step RACH procedure where the UE transmits one message (message A (MsgA)) including a PRACH and a PUSCH. The operations in which the BS transmits Msg2 and Msg4 in the 4-step RACH procedure may be performed as one operation in the 2-step RACH procedure where the BS transmits one message (message B (MsgB)) including an RAR and contention resolution information.

That is, in the 2-step RACH procedure, the UE may combine Msg1 and Msg3 of the 4-step RACH procedure into one message (e.g., MsgA) and transmit the one message to the BS (501).

In addition, in the 2-step RACH procedure, the BS may combine Msg2 and Msg4 of the 4-step RACH procedure into one message (e.g., MsgB) and transmit the one message to the UE (503).

Based on the combination of these messages, the 2-step RACH procedure may provide a low-latency RACH procedure.

Specifically, MsgA of the 2-step RACH procedure may include a PRACH preamble contained in Msg1 and data contained in Msg3. MsgB of the 2-step RACH procedure may include an RAR contained in Msg2 and contention resolution information contained in Msg4.

### (3) Contention-free RACH

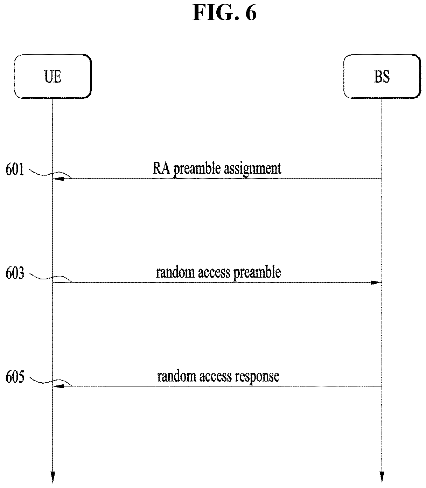

FIG. 6 is a diagram illustrating an exemplary contention-free RACH procedure.

The contention-free RACH procedure may be used when the UE is handed over to another cell or BS or when requested by a command from the BS. The basic steps of the contention-free RACH procedure are similar to those of the contention-based RACH procedure. However, in the contention-free RACH procedure, the BS allocates a preamble to be used by the UE (hereinafter, dedicated random access preamble) to the UE (601), unlike the contention-based RACH procedure in which the UE arbitrarily selects a preamble to be used from among a plurality of random access preambles. Information on the dedicated random access preamble may be included in an RRC message (e.g., handover command) or provided to the UE through a PDCCH order. When the RACH procedure is initiated, the UE transmits the dedicated random access preamble to the BS (603). When the UE receives an RAR from the BS, the RACH procedure is completed (605).

In the contention-free RACH procedure, a CSI request field in an RAR UL grant indicates whether the UE includes an aperiodic CSI report in corresponding PUSCH transmission. The SCS for Msg3 PUSCH transmission is provided by an RRC parameter. The UE may transmit a PRACH and a Msg3 PUSCH on the same UL carrier of the same serving cell. The UL BWP for Msg3 PUSCH transmission is indicated by system information block 1 (SIB1).

### (4) Mapping between SSBs and PRACH resources (occasions)

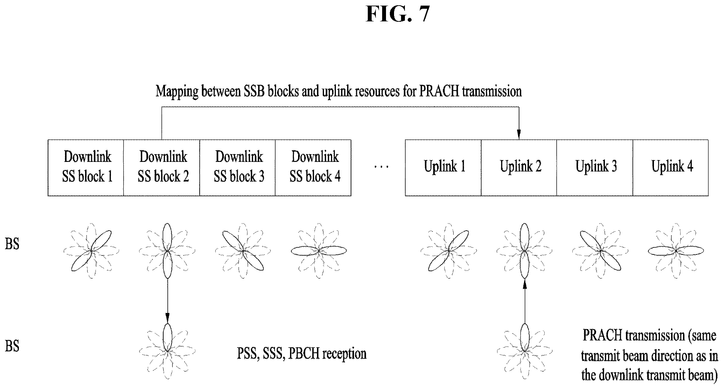

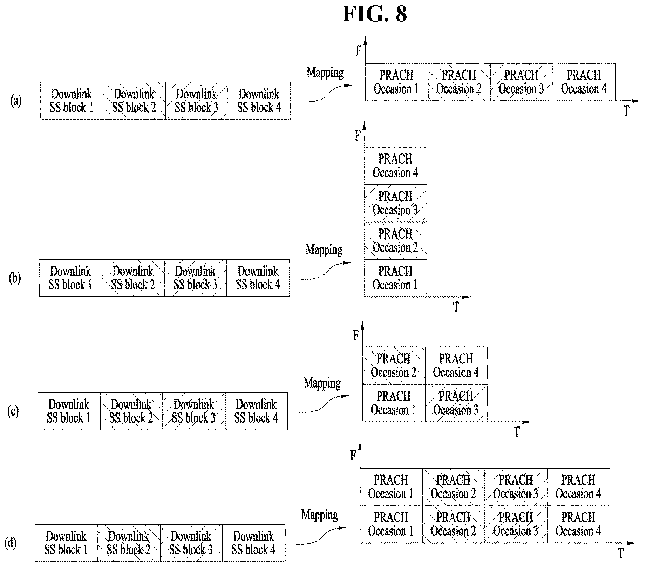

FIGS. 7 and 8 are diagrams illustrating transmission of SSBs and PRACH resources linked to the SSBs according to various embodiments of the present disclosure.

To communicate with one UE, the BS may need to find out what is the optimal beam direction between the BS and UE. Since it is expected that the optimal beam direction will vary according to the movement of the UE, the BS needs to continuously track the optimal beam direction. A process of finding out the optimal beam direction between the BS and UE is called a beam acquisition process, and a process of continuously tracking the optimal beam direction between the BS and UE is called a beam tracking process. The beam acquisition process may be required in the following cases: 1) initial access where the UE attempts to access the BS for the first time; 2) handover where the UE is handed over from one BS to another BS; and 3) beam recovery for recovering beam failure. The beam failure means a state in which while performing the beam tracking to find out the optimal beam between the UE and BS, the UE loses the optimal beam and thus is incapable of maintaining the optimal communication state with the BS or incapable of communicating with the BS.

In the NR system, a multi-stage beam acquisition process is being discussed for beam acquisition in an environment using multiple beams. In the multi-stage beam acquisition process, the BS and UE perform a connection setup by using a wide beam in the initial access stage. After the connection setup is completed, the BS and UE perform the highest quality of communication by using a narrow beam. The beam acquisition process in the NR system applicable to various embodiments of the present disclosure may be performed as follows.
- 1) The BS transmits a synchronization block for each wide beam to allow the UE to discover the BS in the initial access stage, that is, in order for the UE to find the optimal wide beam to be used in the first stage of the beam acquisition by performing cell search or cell acquisition and measuring the channel quality of each wide beam.
- 2) The UE performs the cell search on the synchronization block for each beam and acquires a DL beam based on the detection result for each beam.
- 3) The UE performs a RACH procedure to inform the BS that the UE discovers that the UE intends to access the BS.
- 4) The BS connects or associates the synchronization block transmitted for each beam with a PRACH resource to be used for PRACH transmission to allow the UE to simultaneously inform the RACH procedure and the DL beam acquisition result (e.g., beam index) at wide beam levels. If the UE performs the RACH procedure on a PRACH resource associated with the optimal beam direction that the UE finds, the BS obtains information on the DL beam suitable for the UE by receiving a PRACH preamble.

Energy savings of the BS are considered important in a wireless communication system including 3GPP, because the energy savings may contribute to building an eco-friendly network through carbon emission reduction and reducing operational expenditure (OPEX) by communication companies. In particular, since high transmission rate is required due to introduction of 5G communication, BSs need to be equipped with a larger number of antennas and provide services through a wider bandwidth and frequency band. According to a recent study, the energy cost of the BS has reached a level of 20% of the total OPEX. Due to this growing interest in the energy savings of the BS, 3GPP NR release 18 has approved a new study item called "study on network energy savings".

Specifically, the corresponding item considers the following enhancement techniques in order to improve energy saving capabilities in terms of transmission and reception of the BS.
- How to apply one or more NES techniques more efficiently for a dynamic and/or semi-static operation and a finer granularity adaptation operation of transmission and/or reception in time, frequency, space, and power domains, based on UE assistance information and potential support/feedback from the UE.

The present disclosure intends to propose an energy saving method of a BS in the frequency domain.

The present disclosure considers a scenario for acquiring NES gain, in which the BS transmits a broadcast channel such as an SSB/SIB only on a specific carrier for power savings and is mainly in charge of RACH reception and data transmission/reception on other carriers without performing broadcast channel related transmission.

For example, in a single cell with multiple carriers, all signals and channels including the broadcast channel such as the SSB/SIB may be transmitted/received on an anchor carrier as in a normal cell, and only RACH reception and data transmission/reception may be performed on one or more non-anchor carriers.

In this case, since there are no signals periodically transmitted on one or more non-anchor carriers, power consumption may be reduced through a relatively long sleep mode (i.e., power saving mode) and interference mitigation may be expected.

The scenario considered in the present disclosure (i.e., a scenario of a single cell with multiple carriers) may be replaced with a scenario in which a plurality of serving cells is grouped into one group, all signals and channels including the broadcast channel such as the SSB/SIB are transmitted/received in a specific anchor serving cell within the group, and only RACH reception and data transmission/reception are performed in one or more non-anchor serving cells.

Alternatively, the scenario may be replaced with a scenario in which a plurality of BWPs is grouped into one serving cell, all signals and channels including the broadcast channel such as the SSB/SIB may be transmitted/received in a specific BWP within the serving cell, and only RACH reception and data transmission/reception are performed in one or more non-anchor BWPs. Therefore, a carrier in the following proposals (i.e., [Method #1] and [Method #2]) may be applied by being replaced with a serving cell or a BWP.

FIGS. 9 to 11 are diagrams for explaining overall operation processes of a UE and a BS according to an embodiment of the present disclosure.

FIG. 9 is a diagram for explaining the overall operation process of the UE.

Referring to FIG. 9, the UE may receive a broadcast channel on a first carrier among a plurality of carriers (S901). For example, the broadcast channel may be an SSB/SIB. For example, the first carrier may be an anchor carrier based on [Method #1] and may be an anchor carrier and/or a non-anchor carrier based on [Method #2]. In other words, S901 may be based on [Method #1] and/or [Method #2].

The UE may transmit a PRACH on a second carrier among the plurality of carriers (S903). For example, the PRACH may be a PRACH corresponding to Msg1 or MsgA. In addition, the second carrier may be, for example, the anchor carrier or the non-anchor carrier. S903 may be based on [Method #1].

The UE may receive an RAR or Msg4 corresponding to the PRACH (S905). S905 may be based on [Method #1]. Based on [Method #2], S903 and S905 may be omitted and the UE may measure the received broadcast channel.

FIG. 10 is a diagram for explaining the overall operation process of the BS.

Referring to FIG. 10, the BS may transmit a broadcast channel on a first carrier among a plurality of carriers (S1001). For example, the broadcast channel may be an SSB/SIB. For example, the first carrier may be an anchor carrier based on [Method #1] and may be the anchor carrier and/or a non-anchor carrier based on [Method #2]. In other words, S1001 may be based on [Method #1] and/or [Method #2].

The BS may receive a PRACH on a second carrier among the plurality of carriers (S1003). For example, the PRACH may be a PRACH corresponding to Msg1 or MsgA. In addition, the second carrier may be, for example, the anchor carrier or the non-anchor carrier. S1003 may be based on [Method #1].

The BS may transmit an RAR or Msg4 corresponding to the PRACH (S1005). S1005 may be based on [Method #1]. Based on [Method #2], S1003 and S1005 may be omitted.

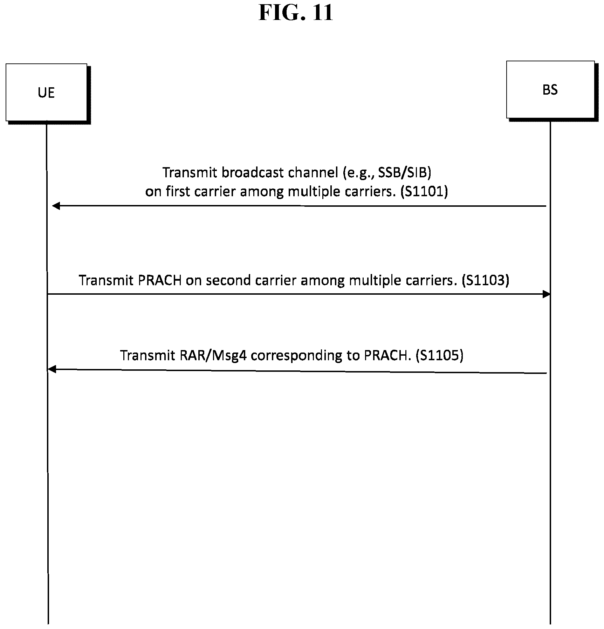

FIG. 11 is a diagram for explaining the overall operation process of a network.

Referring to FIG. 11, the BS may transmit a broadcast channel on a first carrier among a plurality of carriers (S1101). For example, the broadcast channel may be an SSB/SIB. For example, the first carrier may be an anchor carrier based on [Method #1] and may be the anchor carrier and/or a non-anchor carrier based on [Method #2]. In other words, S1101 may be based on [Method #1] and/or [Method #2].

The UE may transmit a PRACH on a second carrier among the plurality of carriers (S1103). For example, the PRACH may be a PRACH corresponding to Msg1 or MsgA. In addition, the second carrier may be, for example, the anchor carrier or the non-anchor carrier. S1103 may be based on [Method #1].

The BS may transmit an RAR or Msg 4 corresponding to the PRACH (S1105). S1105 may be based on [Method #1]. Based on [Method #2], S1103 and S1105 may be omitted.

### [Method #1] A method in which a BS having multiple carriers transmits a broadcast channel such as an SSB/SIB only on a specific carrier such as an anchor carrier and performs an RACH-related procedure on the remaining carriers such as non-anchor carriers when the broadcast channel such as the SSB/SIB is not transmitted

Here, when the RACH-related procedure is a 4-step RACH, an RACH described later may be Msg1. In addition, when the RACH-related procedure is a 2-step RACH, the RACH described later may be MsgA (i.e., a PRACH and/or a physical uplink shared channel (PUSCH)).

### 1. Method #1-1

A carrier with a high priority may be selected in consideration of reception (Rx) power consumption of the BS, and the RACH may be transmitted on the selected carrier.
(1) When there are multiple carriers with the same priority, one of the plurality of carriers with the same priority may be randomly selected or a carrier for RACH transmission may be selected according to a prearranged/preconfigured rule. For example, a carrier having the lowest index or a carrier having the highest index may be selected as the carrier for RACH transmission from among the plurality of carriers with the same priority.

### 2. Method #1-2

When a non-anchor carrier list is provided in an SIB, an index of a non-anchor carrier on which the RACH is to be transmitted among non-anchor carriers included in the non-anchor carrier list may be directly indicated.

For example, the non-anchor carrier list may be provided through SIB 1, and among non-anchor carriers included in the non-anchor carrier list, an index of a non-anchor carrier on which the RACH is to be transmitted may be directly indicated through OSI.
(1) Unless otherwise indicated, the RACH may be transmitted on an anchor carrier by default or a specific carrier may be selected for RACH transmission. For example, when the non-anchor carrier list is provided through the SIB and there is no separate indication, the RACH may be transmitted on the anchor carrier, or a non-anchor carrier having the lowest index or a non-anchor carrier having the highest index among the non-anchor carriers included in the list may be selected for RACH transmission.

If the non-anchor carrier list is not provided through the SIB, the RACH may be transmitted on the anchor carrier, or the carrier having the lowest index or the carrier having the highest index among a plurality of carriers possessed by the BS may be selected for RACH transmission.

### 3. Method #1-3

The UE may select a carrier associated with a selected SSB index and transmit the RACH on the selected carrier.
(1) SSB-to-RACH occasion (RO) mapping may be configured for each carrier like supplementary uplink (SUL). When one SSB is mapped to a plurality of carriers, the UE may transmit the RACH by randomly selecting one of the plurality of carriers or selecting a specific carrier. For example, the UE may transmit the RACH on a carrier having the lowest index or a carrier having the highest index among the plurality of carriers mapped to the SSB.

### 4. Method #1-4

Non-anchor carriers may be grouped into a plurality of non-anchor carrier groups. For example, non-anchor carriers may be grouped into a plurality of non-anchor carrier groups based on an anchor carrier according to a predefined rule or a method configured in the SIB.

In addition, one non-anchor carrier group selected from among the plurality of non-anchor carrier groups or a specific carrier of anchor carriers may be selected as a carrier for RACH transmission. In this case, a method of selecting, by the UE, the non-anchor carrier group or the anchor carrier may use a method of comparing downlink (DL) quality measured by the UE with at least one threshold value as will be described later.
(1) Meanwhile, when one non-anchor carrier group is selected among the plurality of non-anchor carrier groups, the non-anchor carrier group may be selected based on an Rx RSRP threshold of the SSB.

For example, DL quality measured on the anchor carrier may be compared with a specific threshold to select a specific non-anchor carrier group from among the plurality of non-anchor carrier groups. For example, when the measured DL quality is greater than threshold 1, non-anchor carrier group #1 may be selected; when the measured DL quality is between threshold 1 and threshold 2, an anchor carrier may be selected; and when the measured DL quality is less than or equal to threshold 2, non-anchor carrier group #2 may be selected to transmit the RACH.
1) Meanwhile, when there is one carrier on which the RACH is capable of being transmitted within the selected non-anchor carrier group or the anchor carrier is selected, the RACH may be transmitted on the corresponding carrier.
2) When there is a plurality of carriers on which the RACH is capable of being transmitted in the selected non-anchor carrier group, the BS may transmit a list of non-anchor carriers on which the RACH is capable of being transmitted to the UE. In addition, the UE may select a carrier on which the RACH is to be transmitted through a weight for the list and/or a UE ID. Alternatively, the UE may select an arbitrary carrier or a specific carrier. For example, the UE may select a carrier having the lowest index or a carrier having the highest index among carriers included in the list to transmit the RACH. Alternatively, the UE may select an arbitrary carrier from among carriers included in the list to transmit the RACH.

### 5. Method #1-5

When the BS transmits an RAR on an anchor carrier in response to reception of an RACH, the BS may indicate a carrier on which the RACH related to the RAR is transmitted. In addition, upon failing to receive the RAR, the UE may operate as in (3) below.

Meanwhile, in (1) and (2) of Method #1-5 described later, downlink control information (DCI) may mean RAR (i.e., RAR UL grant).
(1) Some of information related to an index of a carrier on which the RACH is transmitted may be indicated through a random access-radio network temporary identifier (RA-RNTI), and other information may be indicated through the DCI.
   - For example, an index of a group of a carrier on which the RACH is transmitted (e.g., the non-anchor carrier group selected according to Method# 1-4) may be indicated through the RA-RNTI, and an index of a carrier within the group may be indicated through the DCI.
(2) An index of a group of a carrier (e.g., the non-anchor carrier group selected according to Method #1-4) or an index of an anchor carrier may be indicated through a specific field in the DCI. In this case, only one carrier may transmit the RACH within the group of the carrier, or a carrier on which the RACH is transmitted may be an anchor carrier.
(3) If the UE continuously fails to receive the RAR so that the power of the RACH reaches maximum power or the UE fails to perform contention resolution, the UE may select another carrier on which the RACH is to be transmitted. In this case, the other carrier may be selected from the same carrier group as the carrier on which the RACH has previously been transmitted (e.g., the non-anchor carrier group selected according to Method #1-4) or may be selected from another carrier group.

### 6. Method #1-6

The BS may transmit an RAR/Msg4 on an anchor carrier only during initial access and then indicate a specific non-anchor carrier on which a broadcast channel or a DL signal such as a reference signal (RS) is to be received.
(1) For example, the specific non-anchor carrier may be an RACH carrier in a carrier group (e.g., the non-anchor carrier group of Method #1-4) or a specific carrier responsible for broadcast channel transmission in a specific carrier group.
(2) After initial access, the BS may indicate a specific carrier on which a DL/UL signal and channel other than the broadcast channel is to be transmitted/received.

The BS may save energy by turning off transmission/reception of a specific DL/UL signal and channel for a specific time period in a light-load situation in which there is little data to be transmitted or by reducing the amount of frequency resources, such as a BWP which is in operation.

However, since transmission of a broadcast channel such as an SSB/SIB is indispensable for cell (re)selection, initial access, and radio resource measurement (RRM) measurement, even when the BS operates in power saving mode, the BS may need to perform transmission of the broadcast channel by transitioning from sleep mode to active mode at every transmission period. If the BS does not transmit such a signal at all or transmits the signal at an excessively long period, a problem may occur in cell detection of the UE or time and frequency synchronization, resulting in deterioration in the performance of UEs accessing a corresponding cell.

Therefore, in a single cell with multiple carriers, power savings of the BS may be maximized by transmitting the broadcast channel such the SSB/SIB only on a specific carrier such as an anchor carrier and performing only RACH reception or data transmission/reception without transmitting the broadcast channel such as the SSB/SIB on the remaining other carriers such as non-anchor carriers.

Meanwhile, the UE that has performed initial access needs to select a carrier on which the RACH is to be transmitted from among a plurality of carriers. In addition, the above methods may be applied to carrier selection for RACH transmission of the initial access UE. First, the BS may increase the priority of a specific carrier among a plurality of carriers and induce the UE to transmit the RACH on a carrier having a high priority, in order to consider Rx power consumption or to prevent RACH transmission of the UE from being concentrated on a specific carrier. For example, the BS may provide information about the priority of each carrier to the UE through a master information block (MIB)/SIB transmitted on an anchor carrier, and the UE may refer to the information upon selecting a carrier for RACH transmission. If there are multiple carriers having the same priority, the UE may transmit the RACH by randomly selecting one of the multiple carriers or selecting one carrier according to a prearranged/preconfigured rule. For example, the UE may select a carrier having the lowest index or a carrier having the highest index among the plurality of carriers and transmit the RACH on the selected carrier.

If a non-anchor carrier list is provided through the SIB, the BS may directly indicate an index of a non-anchor carrier on which the UE is to transmit the RACH through the SIB transmitted on an anchor carrier. For example, the non-anchor carrier list may be provided through SIB 1, and an index of a non-anchor carrier index on which the RACH is to be transmitted, among non-anchor carriers included in the non-anchor carrier list, may be directly indicated through OSI.

If the BS does not separately indicate the index of the non-anchor carrier for RACH transmission, the UE may transmit the RACH on the anchor carrier by default or transmit the RACH by selecting a specific carrier. For example, if the non-anchor carrier list is provided in SIB 1 or the OSI, and there is no separate indication for the index of the non-anchor carrier for RACH transmission through the OSI, the UE may transmit the RACH on the anchor carrier or a non-anchor carrier having the lowest index or a non-anchor carrier having the highest index among non-anchor carriers included in the list.

If the non-anchor carrier list is not provided through SIB 1 or the OSI, the RACH may be transmitted on the anchor carrier, or a carrier having the lowest index or a carrier having the highest index among a plurality of carriers possessed by the BS may be selected for RACH transmission.

In addition, a relationship with a plurality of carriers may be previously configured for each SSB. For example, when a mapping relationship is configured between an SSB index and a carrier index and the UE selects a specific SSB index, the UE may select a carrier associated with the corresponding SSB index to transmit the RACH. In this case, SSB-to-RO mapping may be configured for each carrier like SUL. If one SSB is mapped to a plurality of carriers, the UE may transmit the RACH by randomly selecting one of the plurality of carriers or selecting a specific carrier. For example, the UE may transmit the RACH on a carrier having the lowest index or a carrier having the highest index among the plurality of carriers mapped to the SSB.

Alternatively, non-anchor carriers may be grouped into a plurality of non-anchor carrier groups. For example, non-anchor carriers may be grouped into a plurality of non-anchor carrier groups based on an anchor carrier according to a predefined rule or a method configured in the SIB.

In addition, one non-anchor carrier group selected from among the plurality of non-anchor carrier groups or a specific carrier of the anchor carrier may be selected as a carrier for RACH transmission.

For example, when there are non-anchor carriers #1, #2, #3, #4, #5, and #6, non-anchor carrier group #1 may consist of non-anchor carriers #1, #2, and #3 and non-anchor carrier group #2 may consist of non-anchor carriers #4, #5, and #6.

In this case, the number of non-anchor carrier groups or the number of carriers in a non-anchor carrier group may be different according to the configuration of the BS. As such, when there is a plurality of non-anchor carrier groups, a non-anchor carrier group should be selected first before selecting a carrier for RACH transmission.

For example, an Rx RSRP threshold of an SSB may be a criterion of selection. For example, when DL quality measured by the UE (e.g., an RSRP value measured based on the SSB) is lower than a specific threshold, a non-anchor carrier group may be selected, and when the DL quality is equal to or greater than the specific threshold, an anchor carrier may be selected to transmit the RACH. Alternatively, DL quality measured on an anchor carrier may be compared with the specific threshold to select a specific non-anchor carrier group.

For example, the UE may select non-anchor carrier group #1 when the measured DL quality is greater than threshold 1, select the anchor carrier when the measured DL quality is between threshold 1 and threshold 2, and select non-anchor carrier group #2 to transmit the RACH when the measured DL quality is less than or equal to threshold 2.

If there is only one carrier on which the RACH is capable of being transmitted in each non-anchor carrier group or if a carrier selected for RACH transmission is an anchor carrier, the UE may transmit the RACH on the corresponding carrier.

However, when there is a plurality of carriers on which the RACH is capable of being transmitted in the non-anchor carrier group, the BS may transmit a list of the non-anchor carriers on which the RACH is capable of being transmitted to the UE.

In addition, the UE may probabilistically select a carrier on which the RACH is to be transmitted through a weight preconfigured/indicated for each non-anchor carrier included in the list and/or through a UE ID. Alternatively, the UE may select an arbitrary carrier from among carriers on which the RACH is capable of being transmitted within a corresponding non-anchor carrier group or select a specific carrier. For example, the UE may transmit the RACH by selecting a carrier having the lowest index or a carrier having the highest index according to prearrangement (e.g., defined in the standard)/preconfiguration among the carriers included in the list. Alternatively, the UE may transmit the RACH by selecting an arbitrary carrier from among the carriers included in the list.

Meanwhile, upon successfully receiving the RACH transmitted by the UE on a specific carrier, the BS may transmit an RAR on an anchor carrier rather than a non-anchor carrier.

Meanwhile, the current number of bits of an RA-RNTI distinguishes only between a 4-step RACH and 2-step MsgA transmitted in an RO of the anchor carrier. Therefore, when an RAR for an RACH transmitted in an RO of the non-anchor carrier is transmitted, a method of informing the UE of a carrier on which the RACH related to the RAR is transmitted may be required, in addition to/in place of use of the RA-RNTI.

As one method, some of information about a carrier index may be indicated through the RA-RNTI, and the other portion of the information may be indicated through DCI. For example, an index of a group of a carrier on which the RACH is transmitted (e.g., the non-anchor carrier group selected of Method# 1-4) may be indicated through the RA-RNTI, and an index of a carrier on which the RACH is transmitted within the group may be indicated through the DCI. Meanwhile, the above-described DCI may mean an RAR (i.e., RAR UL grant).

If there is one carrier on which the RACH is capable of being transmitted for each carrier group or if a carrier on which the RACH is transmitted is an anchor carrier, the BS may inform the UE of an index of a carrier group or an index of an anchor carrier on a specific field in the DCI. Meanwhile, the above-described DCI may mean the RAR (i.e., RAR UL grant).

In addition, if the UE fails to receive an RAR for an RACH transmitted on a carrier selected thereby, when the number of retransmission attempts reaches a maximum value during retransmission of the UE while increasing power ramping or a counter value or when the UE fails to receive Msg4 (contention resolution) for Msg3 although the UE receives the RAR, the UE may resume an RACH procedure by selecting another carrier in the same carrier group or another carrier in another carrier group, other than a carrier on which the RACH has previously been transmitted.

Similar to the case in which the BS transmits a periodic signal (e.g., an SSB/SIB) only on an anchor carrier in order to save power and does not transmit the periodic signal on other non-anchor carriers, the BS may transmit an RAR/Msg4 on the anchor carrier only during initial access and then configure, like the anchor carrier, a specific carrier among non-anchor carriers or a specific carrier in a non-anchor carrier group as a carrier for transmission of a broadcast channel such as an SSB/SIB or for transmission of a specific DL signal such as a periodic CSI-RS.

The carrier for transmission of the broadcast channel and/or transmission of the specific DL signal configured as described above may be a carrier for RACH transmission within a carrier group or a carrier for transmission of a broadcast channel preconfigured/indicated within a specific carrier group. In addition, offloading between carriers and power saving gain may be obtained by indicating a carrier to be transmitted/received for each DL signal/channel as well as the broadcast channel. For example, non-anchor carrier #1 in a specific non-anchor carrier group may be configured to transmit/receive only a periodic DL/UL signal such as periodic CSI-RS (P-CSI-RS) or a common group (CG)-PUSCH, and non-anchor carrier #2 may be configured/indicated to transmit/receive only a dynamic data PDSCH/dynamic granted (DG)-PUSCH.

According to [Method #1], power for the broadcast channel is consumed only on a specific carrier and power consumed for other carriers is reduced, by transmitting and receiving a periodically transmitted broadcast channel only on the specific carrier, thereby reducing overall power consumption of the BS. In addition, a channel (e.g., a PRACH) corresponding to the broadcast channel is transmitted by selecting a specific carrier, so that power may be efficiently distributed and overall power consumption of the BS may be reduced. In addition, RACH transmission is performed on a carrier (e.g., a non-anchor carrier) other than a specific carrier to achieve load balancing, thereby preventing RACH transmission from being concentrated on the specific carrier (e.g., an anchor carrier).

### [Method #2] A time and frequency synchronization method on a non-anchor carrier on which transmission of a broadcast channel (e.g., an SSB/SIB) is not performed

### 1. Method #2-1

Through a hopping pattern of an SSB or a tracking reference signal (TRS), the SSB or the TRS may be transmitted occasionally even on a non-anchor carrier.

### 2. Method #2-2

The BS may inform the UE that the SSB/TRS is transmitted at a long period on a non-anchor carrier through an SIB transmitted in an anchor carrier.

### 3. Method #2-3

An RAN4 serving cell measurement requirement different from a requirement on the anchor carrier may be applied to the non-anchor carrier.

### 4. Method #2-4

Time and frequency synchronization may be performed by satisfying a specific condition or triggering a CSI-RS/SRS/PRACH on-demand. For example, the CSI-RS/SRS/PRACH may be triggered whenever a UL/DL signal is transmitted/received N times, so that time and frequency synchronization may be performed.

Examples of [Method #2] described below may be performed in a situation in which an anchor carrier and a non-anchor carrier are configured as inter-band CA, as in [Method #1] of the present disclosure. However, the examples of [Method #2] are not limited thereto.

When transmission of a periodic signal such as an SSB/SIB is performed only on a specific carrier such as an anchor carrier and is not transmitted on the remaining carriers such as non-anchor carriers, the time and frequency of UEs may not be synchronized with other carriers and may be slightly misaligned, by the absence of an RS transmitted on the non-anchor carrier. Therefore, for time and frequency synchronization between carriers, the SSB or the TRS may be transmitted occasionally even on the non-anchor carrier.

For example, an SSB or TRS hopping pattern may be configured between carriers. Then, the SSB and TRS, which are always periodically transmitted on the anchor carrier, may be transmitted occasionally while hopping between the non-anchor carriers. For example, if the SSB (or TRS) transmission period of the anchor carrier is 20 ms, the SSB (or TRS) may be transmitted once every 160 ms on non-anchor carrier #1 and non-anchor carrier #2 to assist time and frequency synchronization. That is, the SSB/TRS of the anchor carrier may be periodically transmitted separately, and the SSB/TRS may be transmitted even on the non-anchor carrier at a relatively long transmission period compared with the SSB/TRS transmission period of the anchor carrier to perform inter-band measurement.

In this case, the RAN4 serving cell measurement requirement different from a requirement of the anchor carrier may be applied to the non-anchor carrier. For example, a relaxed requirement may be applied in the time/spatial domain as in the case in which the number of beams to be reported on the non-anchor carrier is set to be less than the number of beams to be reported on the anchor carrier, or a time offset for determining the start time of a measurement window of the non-anchor carrier is set to be greater than a time offset value for determining the starting point of a serving cell measurement window of the anchor carrier. If the same measurement requirement as the existing requirement (i.e., the same as the requirement on the anchor carrier) is applied to the non-anchor carrier, UEs connected to the non-anchor carrier may unnecessarily perform handover. Therefore, in order to reduce unnecessary handover and perform stable traffic transmission and reception, it may be desirable to apply the more relaxed requirement to the non-anchor carrier than to the anchor carrier.

In addition to SSB or TRS transmission on the non-anchor carrier through the hopping pattern, when certain conditions are satisfied on the non-anchor carrier, it may be considered to automatically trigger CSI-RS, SRS, or PRACH transmission to perform time and frequency synchronization. For example, the UE may request that the BS perform TRS transmission whenever the UE receives a PDSCH N times on the non-anchor carrier, or the UE may transmit the TRS without a request when the BS transmits the PDSCH N times.

According to [Method #2], the broadcast channel may be transmitted at a long period even on carriers other than a specific carrier on which the broadcast channel is periodically transmitted. Thereby, synchronization of other carriers may be maintained while reducing the overall power consumption of the BS.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 11 illustrates a communication system 1 applied to the present disclosure.

Referring to FIG. 11, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

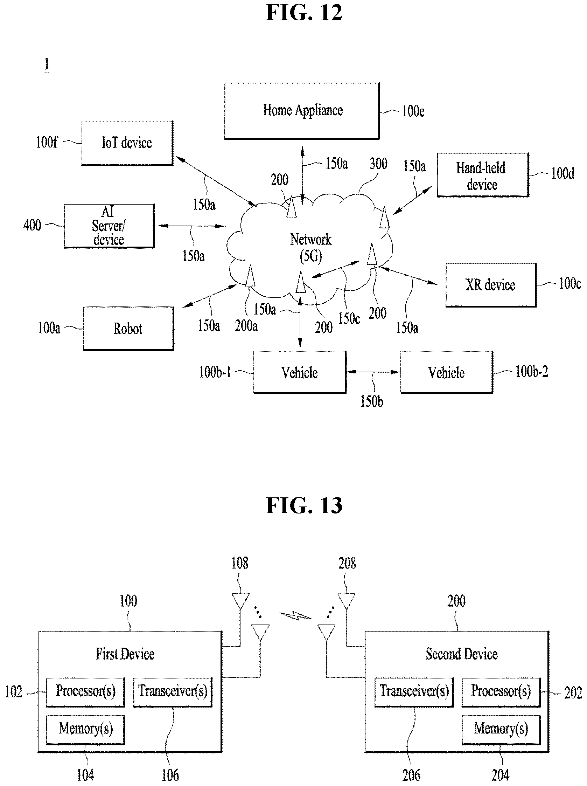

FIG. 12 illustrates wireless devices applicable to the present disclosure.

Referring to FIG. 12, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor 102 of the first wireless device 100 and stored in the memory 104 of the first wireless device 100, according to an embodiment of the present disclosure will be described.

Although the following operations will be described based on a control operation of the processor 102 in terms of the processor 102, software code for performing such an operation may be stored in the memory 104. For example, in the present disclosure, the at least one memory 104 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 102 may receive a broadcast channel through the transceiver 106 on a first carrier among a plurality of carriers. For example, the broadcast channel may be an SSB/SIB. For example, the first carrier may be an anchor carrier based on [Method #1] and may be the anchor carrier and/or a non-anchor carrier based on [Method #2]. In other words, the above-described operation of the processor 102 may be based on [Method #1] and/or [Method #2].

The processor 102 may transmit a PRACH through the transceiver 106 on a second carrier among a plurality of carriers. For example, the PRACH may be a PRACH corresponding to Msg1 or MsgA. In addition, for example, the second carrier may be the anchor carrier or the non-anchor carrier. The above-described operation of the processor 102 may be based on [Method #1].

Processor 102 may receive an RAR or Msg4 corresponding to the PRACH through the transceiver 106. The above-described operation of the processor 102 may be based on [Method #1]. Based on [Method #2], the operation of the processor 102 for transmitting the PRACH and receiving the RAR or Msg4 may be omitted, and the processor 102 may measure the received broadcast channel.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 100 and stored in the memory 204 of the second wireless device 200, according to an embodiment of the present disclosure will be described.

Although the following operations will be described based on a control operation of the processor 202 in terms of the processor 202, software code for performing such an operation may be stored in the memory 204. For example, in the present disclosure, the at least one memory 204 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 202 may transmit a broadcast channel through the transceiver 206 on a first carrier among a plurality of carriers. For example, the broadcast channel may be an SSB/SIB. For example, the first carrier may be an anchor carrier based on [Method #1], and may be the anchor carrier and/or a non-anchor carrier based on [Method #2]. In other words, the above-described operation of the processor 202 may be based on [Method #1] and/or [Method #2].

The processor 202 may receive a PRACH through the transceiver 206 on a second carrier among a plurality of carriers. For example, the PRACH may be a PRACH corresponding to Msg1 or MsgA. In addition, for example, the second carrier may be the anchor carrier or the non-anchor carrier. In addition, the above-described operation of the processor 202 may be based on [Method #1].

The processor 202 may transmit an RAR or Msg4 corresponding to the PRACH through transceiver 206. The above-described operation of the processor 202 may be based on [Method #1]. Based on [Method #2], the above-described operation of the processor 202 for receiving the PRACH and transmitting the RAR or Msg4 may be omitted.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 13 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 13, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

While the above-described method of transmitting or receiving a broadcast channel and a random access channel and the apparatus therefor have been described based on an example applied to a 5G NR system, the method and apparatus are applicable to various wireless communication systems in addition to the 5G NR system.

## Claims

1. A method of transmitting a random access channel (RACH) by a user equipment (UE) in a wireless communication system, the method comprising:
receiving a synchronization signal block (SSB) on a first carrier among a plurality of carriers;
determining a second carrier for transmitting the RACH among the plurality of carriers; and
transmitting the RACH on the second carrier.

2. The method of claim 1, wherein the second carrier is a carrier having a highest priority among the plurality of carriers.

3. The method of claim 1, further comprising
receiving, on the first carrier, a system information block (SIB) that includes a list including at least one carrier on which the RACH is capable of being transmitted among the plurality of carriers,
wherein the determining the second carrier includes
receiving information related to the second carrier included in the at least one carrier, and
determining the second carrier based on the information.

4. The method of claim 1, wherein the second carrier is a carrier mapped to the SSB.

5. The method of claim 1, wherein the second carrier is determined based on reference signal received power (RSRP) of the SSB.

6. The method of claim 1, further comprising
receiving a random access response (RAR) related to the RACH,
wherein the RAR includes information related to the second carrier.

7. A user equipment (UE) for transmitting a random access channel (RACH) in a wireless communication system, the UE comprising:
at least one transceiver;
at least one processor; and
at least one memory operably connected to the at least one processor and configured to store instructions that, when executed, cause the at least one processor to perform operations,
wherein the operations comprise:
receiving a synchronization signal block (SSB) through the at least one transceiver on a first carrier among a plurality of carriers;
determining a second carrier for transmitting the RACH among the plurality of carriers; and
transmitting the RACH through the at least one transceiver on the second carrier.

8. The UE of claim 7, wherein the second carrier is a carrier having a highest priority among the plurality of carriers.

9. The UE of claim 7, wherein the operations further comprise
receiving, on the first carrier, a system information block (SIB) that includes a list including at least one carrier on which the RACH is capable of being transmitted among the plurality of carriers,
wherein the determining the second carrier includes
receiving information related to the second carrier included in the at least one carrier, and
determining the second carrier based on the information.

10. The UE of claim 7, wherein the second carrier is a carrier mapped to the SSB.

11. The UE of claim 7, wherein the second carrier is determined based on reference signal received power (RSRP) of the SSB.

12. The UE of claim 7, wherein the operations further comprise
receiving a random access response (RAR) related to the RACH,
wherein the RAR includes information related to the second carrier.

13. A method of receiving a random access channel (RACH) by a base station (BS) in a wireless communication system, the method comprising:
transmitting a synchronization signal block (SSB) on a first carrier among a plurality of carriers; and
receiving the RACH on a second carrier determined to receive the RACH among the plurality of carriers.

14. A base station (BS) for receiving a random access channel (RACH) in a wireless communication system, the BS comprising:
at least one transceiver;
at least one processor; and
at least one memory operably connected to the at least one processor and configured to store instructions that, when executed, cause the at least one processor to perform operations,
wherein the operations comprise:
transmitting a synchronization signal block (SSB) through the at least one transceiver on a first carrier among a plurality of carriers; and
receiving the RACH through the at least one transceiver on a second carrier determined to receive the RACH among the plurality of carriers.

15. An apparatus for transmitting a random access channel (RACH) in a wireless communication system, the apparatus comprising:
at least one processor; and
at least one memory operably connected to the at least one processor and configured to store instructions that, when executed, cause the at least one processor to perform operations,
wherein the operations comprise:
receiving a synchronization signal block (SSB) on a first carrier among a plurality of carriers;
determining a second carrier for transmitting the RACH among the plurality of carriers; and
transmitting the RACH on the second carrier.

16. A computer-readable storage medium including at least one computer program that causes at least one processor to perform operations,
wherein the operations comprise:
receiving a synchronization signal block (SSB) on a first carrier among a plurality of carriers;
determining a second carrier for transmitting the RACH among the plurality of carriers; and
transmitting the RACH on the second carrier.
